# EUROPÄISCHE PATENTSCHRIFT

(11) **EP 1 356 991 B1**
(45) Veröffentlichungstag und Bekanntmachung des Hinweises auf die Patenterteilung: **22.02.2006**
(21) Anmeldenummer: 03008637.5
(22) Anmeldetag: 15.04.2003
(51) Int. Cl.: B60R 5/04, B60R 21/06

(54) **Kfz-Sicherheitseinrichtung, wie Laderaumabdeckung, Trennnetz od.dgl.**
Safety device for vehicles, such as luggage compartment cover, partitioning net, or the like
Dispositif de sécurité pour véhicules, tel que volet cache-bagages, filet de séparation, etc

(30) Priorität: 25.04.2002 DE 10218632
(43) Veröffentlichungstag der Anmeldung: 29.10.2003
(73) Patentinhaber: BOS GmbH & Co. KG, 73760 Ostfildern (DE)
(72) Erfinder: Göbbels, Andreas, 51515 Kürten (DE)
(74) Vertreter: Patentanwälte Ruff, Wilhelm, Beier, Dauster & Partner

(56) Entgegenhaltungen:
- DE-A- 3 922 450
- DE-A- 19 532 276
- DE-A- 19 738 538
- DE-C- 10 033 381
- DE-C- 19 736 170
- US-A- 5 618 077
- US-A- 5 676 415
- US-A- 5 813 449
- US-A- 5 961 172

## Beschreibung

Die Erfindung betrifft eine Kfz-Sicherheitseinrichtung gemäß dem Oberbegriff des Anspruches 1.

Derartige Kfz-Sicherheitseinrichtungen sind bekannt und weit verbreitet. Insbesondere in Kombinations-Personenkraftwagen spielen Laderaumabdeckungen oder Trennnetze, auf die die vorliegende Erfindung jedoch nicht beschränkt ist, Anwendung.

Die Befestigung des Gehäuses an einer Befestigungsstelle, insbesondere fahrzeugseitig, birgt besondere Herausforderungen. Die axiale Länge des Gehäuses erstreckt sich üblicherweise nahezu über die gesamte Fahrzeugbreite, wobei zu berücksichtigen ist, dass das Gehäuse lösbar befestigbar ist, also insbesondere aus dem Kfz-Innenraum auch vollständig entnommen werden kann. Dies bedeutet, dass eine beispielsweise fahrzeugseitige, also insbesondere rohbauseitige Befestigung, üblicherweise durch Befestigungselemente erfolgt, die an den axialen Endbereichen des Gehäuses angeordnet sind.

Aufgrund von Fertigungs- und Montagetoleranzen kann es bei der Befestigung des Gehäuses zu Problemen kommen. Andererseits können bei dauerhaftem Einsatz des Gehäuses in der Montageposition über sehr lange Zeiträume Beeinträchtigungen aufgrund der großen Toleranzen auftreten.

Der Erfindung liegt die Aufgabe zugrunde, ausgehend von der bekannten Kfz-Sicherheitseinrichtung, diese so weiterzubilden, dass sie crashsicher ausgebildet werden kann und dass auch größere Toleranzen ohne weiteres ausgeglichen werden können.

Die Erfindung löst diese Aufgabe mit den Merkmalen des Anspruches 1 dadurch, dass dem Befestigungselement eine Spannvorrichtung zugeordnet ist, welche mittels eines Betätigungselementes zur Erzeugung einer Vorspannung zwischen dem Gehäuse und der Befestigungsstelle aus einem zumindest teilweise entspannten Ruhezustand in einen Spannzustand überführbar ist, wobei die Spannvorrichtung bei in Montageposition befindlichem Gehäuse dauerhaft in dem Spannzustand verbleibt.

Vorteilhafte Ausgestaltungen der Erfindung sind in den abhängigen Ausprüchen angegeben.

Das Prinzip der Erfindung besteht somit im wesentlichen darin, eine Spannvorrichtung vorzusehen, die von einem Betätigungselement in einen gespannten Zustand versetzbar ist. Es ist auf diese Weise möglich, durch Betätigung des Betätigungselementes Vorspannkräfte zu erzeugen, die auch sehr große Toleranzen zwischen dem Gehäuse und der Befestigungsstelle ausgleichen können. Die gesonderte Spannvorrichtung kann für eine ausreichende Vorspannung zwischen dem Gehäuse einerseits und der Befestigungsstelle, also beispielsweise der Seitenverkleidung einer Kfz-Seitenwand, andererseits, sorgen.

Entscheidend ist, dass die Spannvorrichtung über einen längeren Zeitraum, also dauerhaft, in ihrem Spannzustand verbleiben kann. Dies gewährleistet, dass das Gehäuse, welches sich in der Montageposition befindet, also in Einsatz, dauerhaft relativ zu der Befestigungsstelle mit großer Vorspannung vorgespannt ist.

Erfindungsgemäß ist es möglich, das Betätigungselement derart auszubilden, dass mit ihm besonders große Vorspannkräfte erzeugt werden können, wobei die zur Betätigung des Betätigungselementes durch einen Benutzer notwendigen Kräfte klein gehalten werden können.

Die Spannvorrichtung weist insbesondere dann, wenn sich das Gehäuse nicht in Montageposition befindet, also beispielsweise aus dem Kfz-Innenraum entnommen ist, einen Ruhezustand auf. In diesem Ruhezustand ist die Spannvorrichtung zumindest teilweise entspannt, was jedoch einschließen kann, dass sie noch eine Restspannung aufweist. Entscheidend ist, dass die Spannvorrichtung in ihrem Spannzustand gespannt oder gegenüber dem Ruhezustand stärker gespannt ist.

Im Stand der Technik sind bereits eine Vielzahl von Kfz-Sicherheitseinrichtungen mit Gehäusen bekannt, an deren axialen Endseiten federvorgespannte, verschiebliche Zapfen vorgesehen sind. In diesem Zusammenhang wird auf die gattungsbildende DE 39 22 450 A1 verwiesen. Bei Anordnungen dieser Art ist regelmäßig ein Betätigungsglied vorgesehen, welches zur Entriegelung des Gehäuses aus seiner Montageposition betätigbar ist. Beim Betätigen des Betätigungsgliedes wird ein Federelement aus seinem Ruhezustand in einen Spannzustand überführt.

Das erfindungsgemäße Prinzip ist gegenüber diesem Stand der Technik in seiner Wirkungsweise geradezu diametral: Das Betätigungselement wird erfindungsgemäß betätigt, um die Spannvorrichtung dauerhaft bei in Montageposition befindlichem Gehäuse zu spannen. Das Spannen dient erfindungsgemäß somit nicht dem Entriegeln des Gehäuses von dem Fahrzeug für eine nachfolgende Entnahme, sondern dem Verriegeln des Gehäuses an einer Befestigungsstelle.

Erfindungsgemäß ist die Erzeugung nahezu beliebig großer Vorspannkräfte zwischen Befestigungsstelle und Gehäuse möglich. Neben der Möglichkeit, auch große Toleranzen auszugleichen, wird hierdurch eine besonders sichere Ruhigstellung des Gehäuses relativ zu dem Fahrzeug im Betrieb erreicht. Außerdem ermöglicht die erfindungsgemäße Kfz-Sicherheitseinrichtung eine einfache Bauweise, die mit einer verhältnismäßig geringen Anzahl von Bauelementen auskommen kann.

Im übrigen bietet es sich an, die erfindungsgemäße Festlegung des Gehäuses mit einer crashsicher ausgebildeten Festlegung eines an einem freien Ende der Werkstoffbahn angeordneten Endelementes, wie Auszugsstab oder Endbord, zu kombinieren. Aus den deutschen Patentanmeldungen DE 102 05 155 und DE 102 05 154 der Anmelderin sind derartige Mechanismen bekannt, die eine crashsicher ausgebildete Befestigung des Endelementes fahrzeugseitig gewährleisten können. Auf diese Weise kommt es zu einer Aufhängung der Werkstoffbahn an beispielsweise vier Befestigungsstellen fahrzeugseitig, so daß im Laderaum befindliche Gegenstände, die in die Werkstoffbahn hineingeschleudert werden, bei entsprechender Kraftverteilung auf die vier Befestigungsstellen sicher daran gehindert werden, in die Fahrgastzelle geschleudert zu werden.

Im übrigen sei an dieser Stelle auf die DE 100 33 381 C1 hingewiesen, bei der eine Befestigungsvorrichtung für Trenngitter für Kraftfahrzeuge vorgesehen ist, die einen Wechsel zwischen einer karosserieseitigen und einer lehnenseitigen Befestigung ermöglicht. Aus dieser Schrift geht keine Spannvorrichtung hervor, die mittels eines Betätigungselementes zur Erzeugung einer Vorspannung zwischen dem Gehäuse und der Befestigungsstelle gespannt werden kann.

Gemäß einer vorteilhaften Ausgestaltung der Erfindung ist eine Arretiervorrichtung für das Betätigungselement vorgesehen, die die Spannvorrichtung im Spannzustand sichert. Durch Arretieren des Betätigungselementes, insbesondere in einer Endlage, kann auf einfache Weise dafür gesorgt werden, dass der Spannzustand dauerhaft erhalten bleibt. Die Ausgestaltung bietet insbesondere die Möglichkeit einer einfachen Bauweise.

Gemäß einer weiteren Ausgestaltung der Erfindung ist das Betätigungselement zumindest in einer Endlage selbsthemmend und/oder automatisch arretierend ausgebildet. Diese Ausgestaltung bietet insbesondere die Möglichkeit einer besonders einfachen Handhabung. Außerdem bietet diese Ausgestaltung ebenfalls die Möglichkeit einer einfachen Bauweise, da auf eine gesonderte Arretiervorrichtung für das Betätigungselement verzichtet werden kann.

Gemäß einer weiteren vorteilhaften Ausgestaltung der Erfindung weist das Betätigungselement zumindest in einer Endlage eine Übertotpunktstellung auf. Diese Ausgestaltung ist insbesondere vorteilhaft, wenn die Übertotpunktstellung in der Endlage des Betätigungselementes vorgesehen ist, die dem Spannzustand der Spannvorrichtung entspricht. Eine Übertotpunktstellung ist dabei in konstruktiv besonders eleganter Weise durch Anordnung eines Gestänges und entsprechender Kraftrichtungen bzw. Krafteinleitungen erreichbar und bietet insoweit Vorteile in konstruktiver Hinsicht.

Gemäß einer weiteren vorteilhaften Ausgestaltung der Erfindung ist das Betätigungselement als schwenkbar gelagerter Hebel ausgebildet. Diese Ausgestaltung bietet den Vorteil, dass große Kräfte zur Erzeugung einer großen Vorspannung mit verhältnismäßig geringen Bedienkräften erreicht werden können. Insbesondere für den Ausgleich großer Toleranzen sind derartige große Spannkräfte förderlich. Durch Wahl der Länge des Hebelarms kann das für einen Benutzer noch hinnehmbare maximale Bedienmoment auf einfache Weise eingestellt werden.

Gemäß einer weiteren vorteilhaften Ausgestaltung der Erfindung ist das Betätigungselement als axial verlagerbarer Schieber ausgebildet. Bei dieser Ausgestaltung der Erfindung besteht ein wesentlicher Vorteil darin, daß das Betätigungselement auch während der Betätigung aus den Konturen des Gehäuses nicht in besonderem Maße herausragt. Verletzungsgefahren können somit vollständig ausgeschlossen werden. Lediglich ein Griffansatz für das als Schieber ausgebildete Betätigungselement ist ohne weiteres zugänglich.

Während bei einem als Schwenkhebel ausgebildeten Betätigungselement ein Benutzer das freie Ende des Hebelarmes ergreift und typischerweise mit seiner Hand der Schwenkbewegung des freien Endes des Hebelarmes folgt, gestaltet sich die Betätigung des axial verlagerbaren Schiebers noch einfacher. Ein Benutzer muß in diesem Fall zur Betätigung des Schiebers nur noch eine Axialbewegung durchführen, um das Betätigungselement aus seiner einen Endlage in seine andere Endlage zu überführen. Die Bedienung des Betätigungselementes kann in diesem Fall somit weiter erleichtert sein.

Gemäß einer weiteren vorteilhaften Ausgestaltung der Erfindung umfasst eine Spannvorrichtung erster Art ein Federelement. Diese Spannvorrichtung ist in konstruktiver Hinsicht besonders einfach ausbildbar. Insbesondere kann vorgesehen sein, dass das Federelement mit axial verlagerbaren Befestigungselementen zusammenwirkt, und beispielsweise koaxial zu dem Befestigungselement angeordnet ist. Darüber hinaus besteht die Möglichkeit, dem Federelement ein Anschlagelement, beispielsweise nach Art eines Konuselements, zum Zusammenwirken z. B. mit einer Aufnahme in der Kfz-Seitenverkleidung zuzuordnen, welches auf dem Befestigungselement geführt, z. B. verschieblich gelagert ist. Das Federelement ist darüber hinaus ein Bauteil, dessen Eigenschaften, hier Federeigenschaften, nach Bedarf einstellbar sind, so dass die Größe der Vorspannkräfte, die gewünscht sind, ohne weiteres eingestellt werden kann.

Gemäß einer weiteren vorteilhaften Ausgestaltung der Erfindung umfasst eine Spannvorrichtung zweiter Art eine Führungsfläche, insbesondere nach Art einer Führungsschräge oder einer Spannfläche. Durch Anordnung einer Führungsfläche kann beispielsweise für eine Relativbewegung zwischen dem Gehäuse und einer Kfz-Fondlehne gesorgt werden. Diese beiden Bauteile können somit aufeinander zu bewegt und gegeneinander vorgespannt werden.

Während die axial-endseitige Befestigung, also beispielsweise die kfz-seitenwandseitige Befestigung, durch Vorspannung zwischen dem Gehäuse und der Karosserie derart erreicht werden kann, dass die beiden Bauteile, also das Gehäuse und die Befestigungsstelle voneinander weggespannt werden, kann die Spannvorrichtung bei Bedarf das Gehäuse und die Kfz-Fondlehne zueinander hinspannen. Insbesondere können dabei auch große Toleranzen in Fahrtrichtung, und zwar Abstände zwischen der Kfz-Fondlehne und dem Gehäuse, ohne weiteres überwunden bzw. ausgeglichen werden.

Gemäß einer weiteren vorteilhaften Ausgestaltung der Erfindung ist das Gehäuse aus einer der Befestigungsstelle fernen Entnahmeposition über eine Vor-Montageposition in die Montageposition überführbar. Das Vorsehen einer Vor-Montageposition bietet den Vorteil, dass an dem Gehäuse gesonderte Haltemittel zur Sicherung des Gehäuses in der Vor-Montageposition angeordnet werden können. Auf diese Weise ist es beispielsweise denkbar, dass ein Benutzer das Gehäuse zunächst in die Vor-Montageposition versetzt, in der es relativ zu dem Kraftfahrzeug lösbar angebracht, aber noch nicht befestigt oder verriegelt ist. Es kann sich dabei beispielsweise um eine von einem Boden eines Laderaumes des Kfz ferne Position handeln. Beispielsweise kann dazu vorgesehen sein, dass in den Kfz-Seitenwänden Kulissenaufnahmen für an dem Gehäuse angeordnete Haltemittel vorgesehen sind.

Ein Bediener kann bei in Vor-Montageposition befindlichem Gehäuse nunmehr das Betätigungselement betätigen, und dafür sorgen, dass eine kfz-seitenwandseitige Befestigung oder Verriegelung vorgenommen wird. Nahezu zeitgleich mit dem Verriegeln wird die Spannvorrichtung aktiviert, und zwar aus ihrem Ruhezustand in ihren Spannzustand überführt. Der Vorgang der Verriegelung und die Erzeugung der Vorspannung finden somit in einem durchgehenden Arbeitsschritt statt, wozu lediglich das Betätigungselement betätigt werden muss. Erst wenn das Betätigungselement in seine Endlage hinein verlagert ist, ist das Gehäuse ordnungsgemäß befestigt und die gewünschte Vorspannung erzeugt.

Soll das Gehäuse aus dieser ersten Montageposition in eine zweite Montageposition überführt werden, bei der das Gehäuse nicht kfz-seitenwandseitig, sondern kfz-fondlehnenseitig befestigt ist, wird das Betätigungselement erneut betätigt, nunmehr beispielsweise gegenläufig. Zunächst findet eine Entriegelung des Gehäuses aus der ersten Montageposition statt, wobei die Spannvorrichtung aus ihrem Spannzustand in den Ruhezustand überführt wird. Bei fortlaufender Bewegung des Betätigungselementes erreicht das Gehäuse seine Vor-Montageposition, in der es an sich von dem Kfz entnehmbar wäre, da das Gehäuse nicht mehr verriegelt ist. Das Betätigungselement wird jedoch nunmehr weiter fortlaufend betätigt und kann in seine zweite Endlage überführt werden, wobei eine zweite Spannvorrichtung dafür sorgt, dass gehäuseseitige Steckelemente mit lehnenseitigen Aufnahmen in Kontakt geraten. Auch hier findet eine Verspannung zwischen der Kfz-Lehne und dem Gehäuse statt, wobei diese Elemente aufeinander zugezogen werden. Eine derartige Relativbewegung von Lehne zu Gehäuse ist dabei insbesondere deshalb möglich, weil das Gehäuse relativ zu der Kfz-Seitenwand nunmehr verlagerbar ist, da es sich in einer Vor-Montageposition befindet, in der es nicht verriegelt ist. Auch große Toleranzen, insbesondere große Abstände zwischen dem Gehäuse und der Kfz-Fondlehne, können auf diese Weise ohne weiteres überwunden werden.

Die Erfindung betrifft darüber hinaus eine Kfz-Sicherheitseinrichtung gemäß des Anspruches 24.

Die Erfindung geht ebenfalls von der bekannten Kfz-Sicherheitseinrichtung aus, die hinsichtlich der fahrzeugseitigen Befestigung ihres Gehäuses auf Grund von Fertigungs- und Montagetoleranzen problematisch ist. Bei der bekannten Kfz-Sicherheitseinrichtung ist das Befestigungselement mittels eines Federelements axial aus dem Gehäuse hervorragend in seine Sperrstellung hinein vorgespannt. Eine crashsichere Ausbildung dieser Kfz-Sicherheitseinrichtung ist nicht ohne weiteres möglich.

Die Erfindung löst die Aufgabe dadurch, daß sich das in Sperrposition befindliche Befestigungselement zumindest mittelbar im wesentlichen starr an dem Gehäuse abstützt.

Dieser erfinderische Gedanke beruht im wesentlichen darauf, daß das Befestigungselement ohne Zwischenschaltung eines Federelementes mit dem Gehäuse koppelbar ist. Beispielsweise kann vorgesehen sein, ein Betätigungselement derartig mit dem Befestigungselement zu koppeln, daß eine unmittelbare kraftschlüssige Anbindung des Befestigungselementes, beispielsweise in Axialrichtung des Gehäuses, an ein selbsthemmendes Betätigungselement erreicht wird. Eine Krafteinleitung von dem Befestigungselement zu dem Kassettengehäüse bzw. zu einem Betätigungselement für das Befestigungselement ist dabei in beliebigen Krafteinleitungsrichtungen ohne elastische Elemente im Kopplungsweg möglich. Insbesondere kann auf Federelemente des Standes der Technik verzichtet werden, die auf herkömmliche Weise Befestigungselemente in ihre Sperrposition hinein vorspannen.

Die zumindest mittelbare, im wesentlichen starre Abstützung des sich in Sperrposition befindlichen Befestigungselement an dem Gehäuse bedeutet dabei im wesentlichen eine Abstützung des Befestigungselementes in der Verlagerungsrichtung, also in Richtung der Freigabeposition des Befestigungselementes.

Die starre Abstützung des Befestigungselementes an dem Gehäuse ermöglicht dabei eine besonders einfache Bauweise, wobei ein zusätzliches Befestigungshilfsmittel, beispielsweise als Teil einer Spannvorrichtung, vorgesehen sein kann, das die für eine Rüttelsicherung sorgen kann.

Im Gegensatz zu der Befestigungsvorrichtung für ein Trenngitter für Kraftfahrzeuge gemäß der DE 100 33 381 C1, welche beispielsweise Drahtseile mit einer gewissen Elastizität vorsieht, kann auf derartige, in Verlagerungsrichtung des Befestigungselementes elastisch wirkende Mittel erfindungsgemäß verzichtet werden.

Weitere Vorteile ergeben sich aus den nicht zitierten Unteransprüchen sowie anhand der nun folgenden Beschreibung eines in Figuren dargestellten Ausführungsbeispiels. Darin zeigen:
- Fig. 1: schematisch in perspektivischer Ansicht eine erfindungsgemäße Kfz-Sicherheitseinrichtung in Montageposition,
- Fig. 2: die Vorrichtung gemäß Fig. 1 aus einer geringfügig veränderten Perspektive unter Weglassung des Gehäuses und anderer Teile,
- Fig. 3: in Einzeldarstellung das Gestänge der Vorrichtung gemäß Fig. 2,
- Fig. 4: das Gestänge gemäß Fig. 3 mit in anderer Endlage befindlichem Betätigungselement,
- Fig. 5: die perspektivische Ansicht einer Befestigungsstelle an der Kfz-Seitenwand bei in einer Vor-Montageposition befindlichem Gehäuse,
- Fig. 6: die Befestigungsstelle gemäß Fig. 5 mit in Montageposition befindlichem Gehäuse,

- Fig. 7: den Befestigungsbereich gemäß Fig. 6 in Hinteransicht,
- Fig. 8: die Befestigungsstelle gemäß Fig. 7 bei in Vor-Montageposition befindlichem Gehäuse,
- Fig. 9: schematisch in Schnittdarstellung den Befestigungsbereich der Fig. 6, etwa in Blickrichtung zum Boden des Laderaumes hin,
- Fig. 10: schematisch eine Schnittdarstellung der Kfz-Sicherheitseinrichtung und der Lehne etwa gemäß Schnittlinie X - X in Fig. 1,
- Fig. 11: die Vorrichtung aus Fig. 10 schematisch in Schnittdarstellung, etwa entlang Schnittlinie XI - XI in Fig. 10,
- Fig. 12: schematisch, in Draufsicht die Kfz-Sicherheitsvorrichtung gemäß Fig. 1 mit demgegenüber in der anderen Endlage befindlichem Betätigungselement,
- Fig. 13: ein zweites Ausführungsbeispiel der in Montageposition befindlichen erfindungsgemäßen Kfz-Sicherheitseinrichtung, in perspektivischer abgebrochener Ansicht, etwa in einer Betrachtungsrichtung eines auf dem Fahrersitz des Kfz befindlichen Betrachters hin zu dem bezüglich der Fahrtrichtung rechten Fahrzeugende, und
- Fig. 14: in einer schematischen, perspektivischen Einzeldarstellung das Gestänge des zweiten Ausführungsbeispiels in einer Darstellung gemäß Fig. 3.

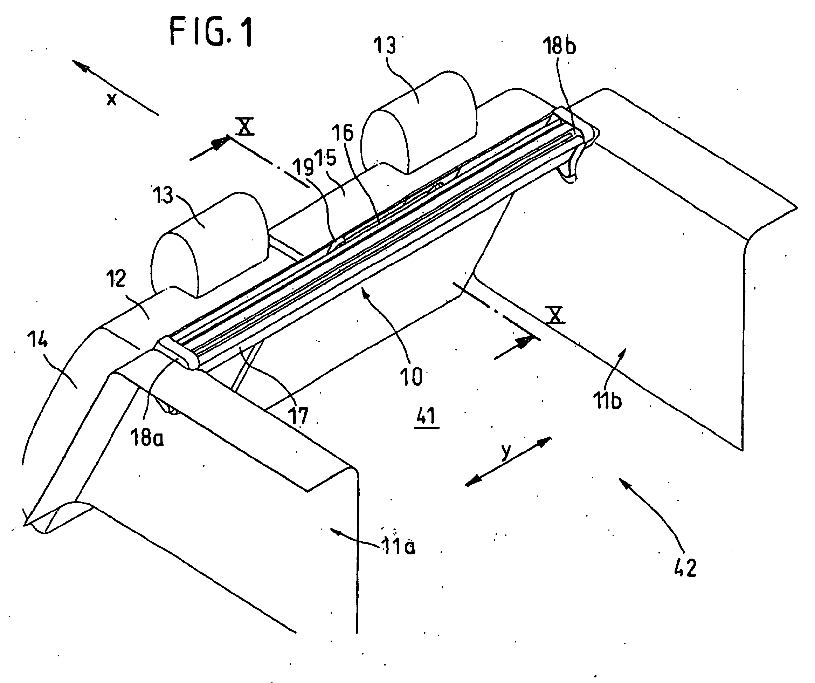

Die in ihrer Gesamtheit mit dem Bezugszeichen 10 bezeichnete Kfz-Sicherheitseinrichtung kann beispielsweise als Kfz-Trennnetz oder als Kfz-Laderaumabdeckung ausgebildet sein. Sie wird üblicherweise beabstandet von einem Boden 41 eines Kfz-Laderaums 42, beispielsweise im Bereich der Seitenverkleidung 11a, 11b des Kfz, also im Bereich der C-Säulen, befestigt. Die Kfz-Sicherheitseinrichtung 10 befindet sich dann in ihrer Montageposition, wie dies Fig. 1 zeigt, unmittelbar hinter der Kfz-Fondlehne 12.

Bei dem Ausführungsbeispiel gemäß Fig. 1 ist die Kfz-Fondlehne 12 geteilt, und weist einen 1/3-Teil 14 und einen 2/3-Teil 15 auf, dem jeweils separate Kopfstützen 13 zugeordnet sind. Beide Teile 14, 15 sind bei Bedarf unabhängig voneinander in Fahrtrichtung X nach vom schwenkbar.

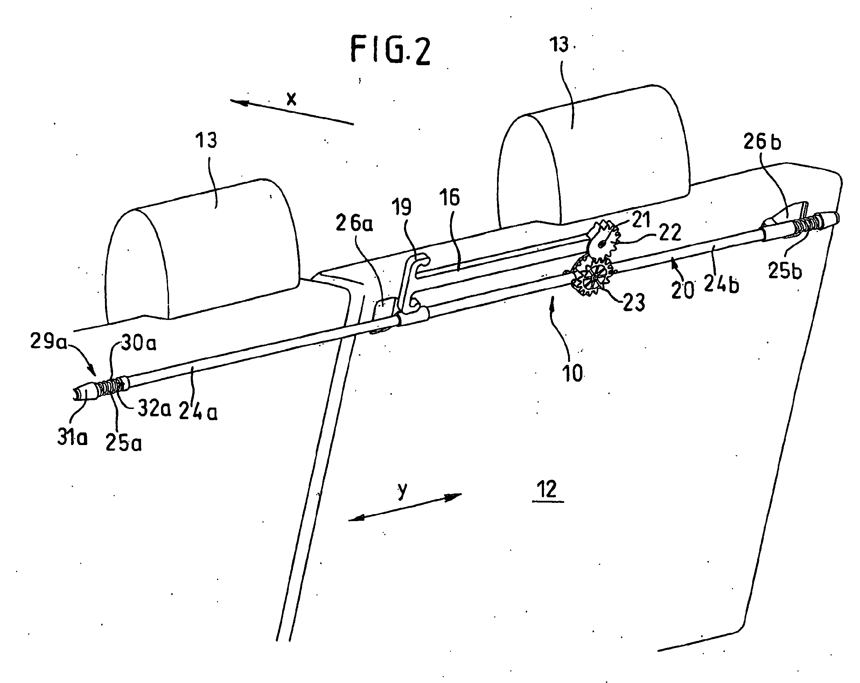

Zur Befestigung eines Gehäuses 17 der Kfz-Sicherheitseinrichtung 10 sind üblicherweise in den axialen Endbereichen 18a, 18b des Gehäuses 17 Befestigungselemente 25a, 25b angeordnet. Mittels dieser Befestigungselemente 25 erster Art ist eine rohbauseitige Befestigung des Gehäuses 17, also insbesondere an der Seitenverkleidung 11a, 11b der Kfz-Seitenwände im Bereich der C-Säule möglich. Die erfindungsgemäße Kfz-Sicherheitseinrichtung sieht jedoch auch eine alternative Befestigung an der Kfz-Fondlehne 12 vor. Hierzu sind Befestigungselemente zweiter Art 26a, 26b (Fig. 2) vorgesehen.

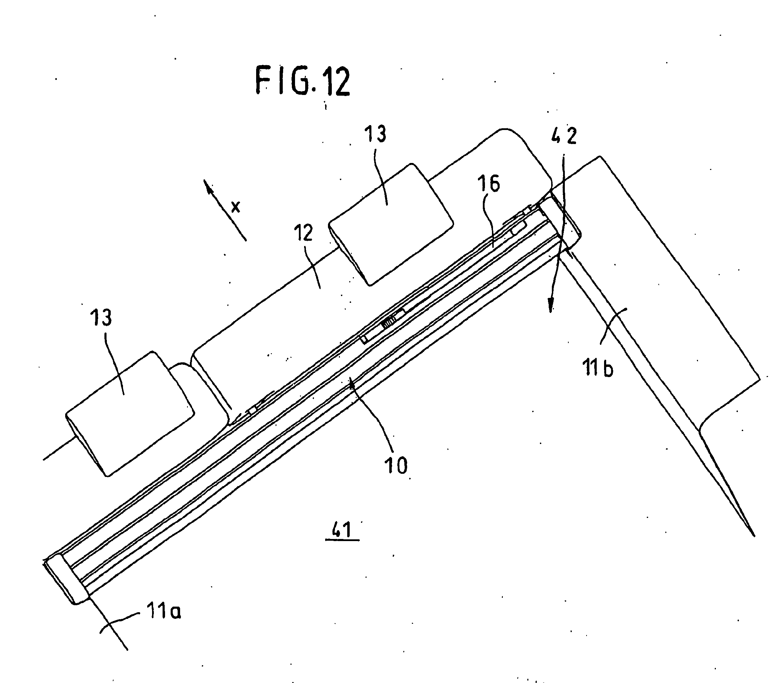

Fig. 1 lässt bereits andeutungsweise ein Betätigungselement 16 erkennen, welches dort in seiner in Fahrtrichtung nach links verschwenkten Endlage dargestellt ist. Fig. 12 zeigt schematisch, in einer Draufsicht die Anordnung gemäß Fig. 1, bei der das Betätigungselement 16 in seine in Fahrtrichtung X nach rechts verschwenkte, zweite Endlage verlagert ist.

Das Betätigungselement 16 weist bei der erfindungsgemäßen Kfz-Sicherheitseinrichtung 10 sowohl die Funktion eines Schalters auf, der einen Wechsel zwischen den beiden Befestigungsarten (rohbauseitig bzw. lehnseitig) ermöglicht. Das Betätigungselement 16 ist darüber hinaus jedoch auch wesentliches Bestandteil einer Spannvorrichtung 29a, 29b, 29c, 29d (auf die später noch detailliert eingegangen wird) und erfüllt insoweit eine Spannfunktion.

Fig. 2 zeigt schematisch die Kfz-Sicherheitseinrichtung 10 gemäß Fig. 1, wobei wesentliche Bestandteile, unter anderem das Gehäuse 16, der Übersichtlichkeit halber weggelassen worden sind.

Das Betätigungselement 16 ist als Hebel ausgebildet, der um eine Schwenkachse 21 schwenkbar angeordnet ist. Es umfasst zunächst einen Griffansatz 19, der einem Benutzer ein einfaches Fassen gestattet und, wie dies Fig. 1 zeigt, aus einem Einbauraum E innerhalb des Gehäuses 17 zumindest geringfügig vorragt, so dass der Griffansatz 19 ohne weiteres zugänglich ist.

Im Bereich der Schwenkachse 21 ist ein Zahnrad 22 drehfest mit dem Hebel 16 verbunden, welches mit einem zweiten Zahnrad 23 mit einer entsprechenden Gegenverzahnung zusammenwirkt. Das zweite Zahnrad 23 ist Bestandteil eines Gestänges 20, welches zwei axial in Richtung des Doppelpfeiles Y, also quer zur Fahrtrichtung X, verschieblich angeordnete Stangen 24a, 24b aufweist.

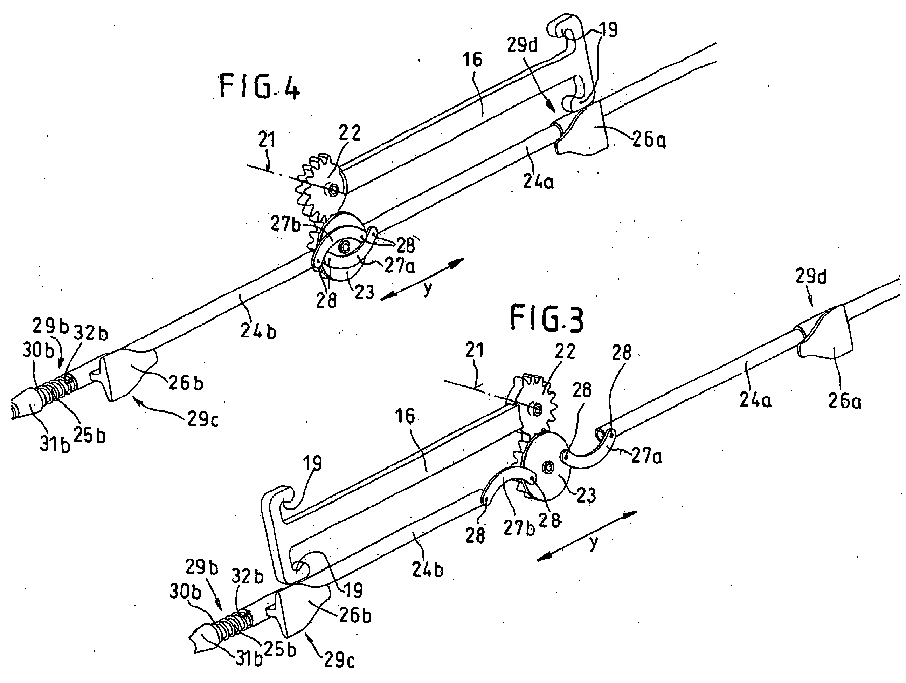

Fig. 3 zeigt die Anordnung gemäß Fig. 2 in Rückansicht, wobei das Betätigungselement 16 die andere Endlage eingenommen hat. Fig. 3 zeigt, dass die Stangen 24a, 24b über Kopplungsmittel 27a, 27b mit dem zweiten Zahnrad 23 verbunden sind. Jedes Kopplungsmittel 27a, 27b ist über jeweils eine Schwenkachse 28 sowohl mit der jeweiligen Stange 24a, 24b als auch mit dem Zahnrad 23 verbunden. Wird ausgehend von einer Situation gemäß Fig. 3 das Betätigungselement 16 mit dem Uhrzeigersinn um die Schwenkachse 21 herum in die in Fig. 4 dargestellte zweite Endlage verschwenkt, so werden die beiden Stangen 24a, 24b aufeinander zu, zur Fahrzeugmitte hin, bewegt.

In entsprechender Weise kann ausgehend von einer Position des Betätigungselementes 16 gemäß Fig. 4 durch eine Verschwenkung des Betätigungselementes 16 entgegen dem Uhrzeigersinn um die Schwenkachse 21 eine Situation gemäß Fig. 3 erreicht werden, bei der die beiden Stangen 24a, 24b voneinander weg, zur Fahrzeugaußenseite hin bewegt worden sind.

An dem jeweiligen axialäußeren Ende der beiden Stangen 24a, 24b sind Befestigungselemente 25a, 25b erster Art angeordnet. Bei dem in den Figuren dargestellten Ausführungsbeispiel besteht darüber hinaus die Besonderheit, dass bewegungseinheitlich und unmittelbar mit den axialen Stangen 24a, 24b gekoppelt, Befestigungselemente 26a, 26b zweiter Art angeordnet sind, die eine axiale Verlagerungsbewegung der Stangen 24a, 24b zeitgleich mit durchlaufen. Auf deren Bedeutung wird später eingegangen. Zunächst wird anhand der Figuren 3, 5 und 6 erläutert, wie die Betätigungselemente 25a, 25b erster Art betätigt werden.

Fig. 3 zeigt, dass bewegungseinheitlich und fest relativ zu der axialen Stange 24b ein Befestigungselement 25b erster Art nach Art eines Zapfens angeordnet ist. Vorzugsweise ist der Zapfen 25b aus metallischem Material und formsteif ausgebildet.

Das Befestigungselement 25b erster Art wird von einem Federelement 30b übergriffen, welches koaxial zu dem Zapfen 25b angeordnet ist und mit einem im Querschnitt konusförmigen Element 31b verbunden ist. Das Federelement 30b stützt sich mit seiner zur Fahrzeugmitte hin gewandten Seite an einer Anschlagfläche 32b ab, die fest relativ zu der axialen Stange 24b angeordnet ist. Das Konuselement 31b ist verschiebbar an dem Befestigungselement 25b gelagert.

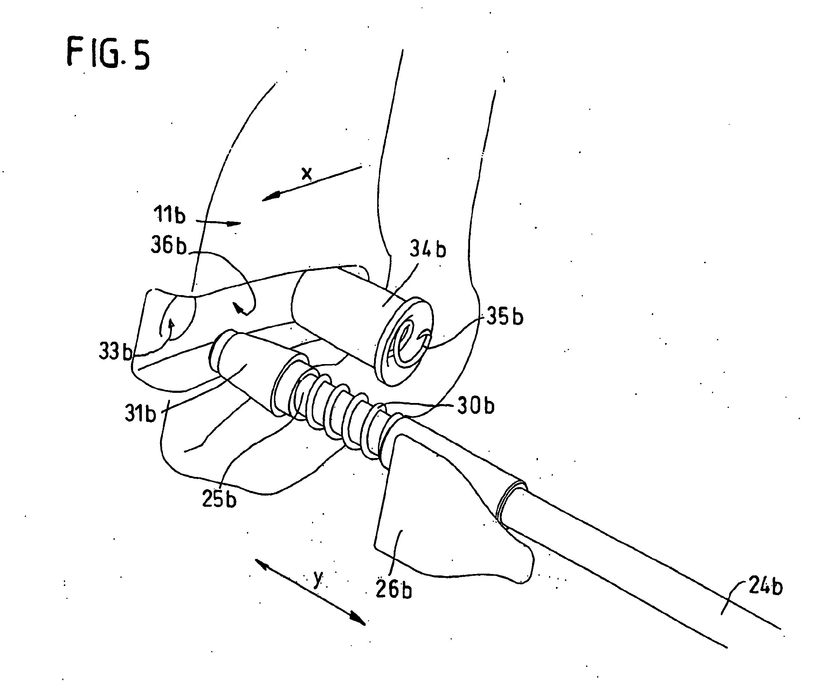

Fig. 5 zeigt ein Haltemittel 34b, welches über ein Federelement 35 auf nicht dargestellte Weise an das Gehäuse 17 angebunden ist. Das Haltemittel 34 ist nach Art eines Zapfens ausgebildet und an dem Gehäuse 10 gelagert.

Wie die Fig. 5 ebenfalls zeigt, ist der Seitenverkleidung 11b eine in Fahrtrichtung X hin offene Einführkulisse 36 zugeordnet, die sich beispielsweise entgegen der Fahrtrichtung X auch verjüngen kann. In der Einführkulisse 36 kann das Haltemittel 34 bis in seine in Fig. 5 dargestellte Anschlagposition hinein eingeführt werden.

Im Bereich des offenen Endes der Einführkulisse 36 ist eine Aufnahme 33b erster Art angeordnet, die der Aufnahme des axialen Endes des Befestigungselementes 25b erster Art dient.

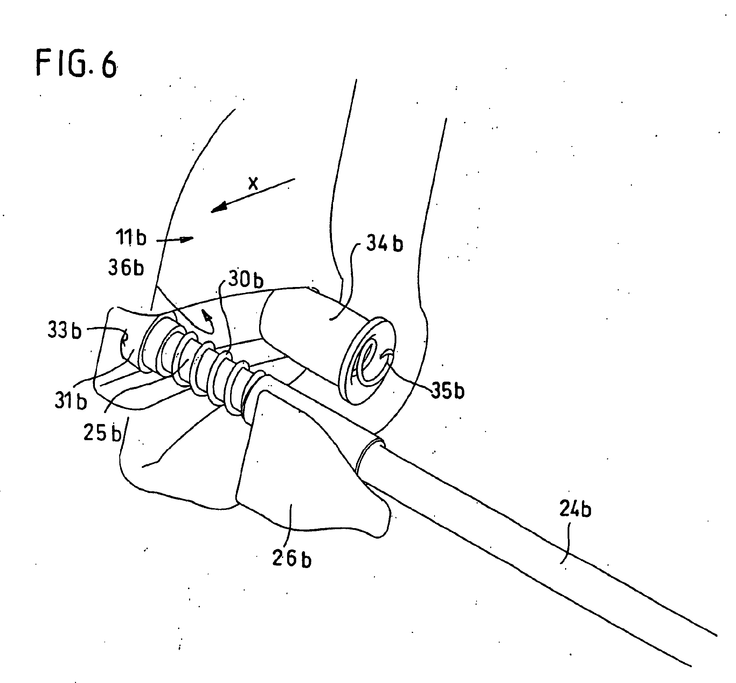

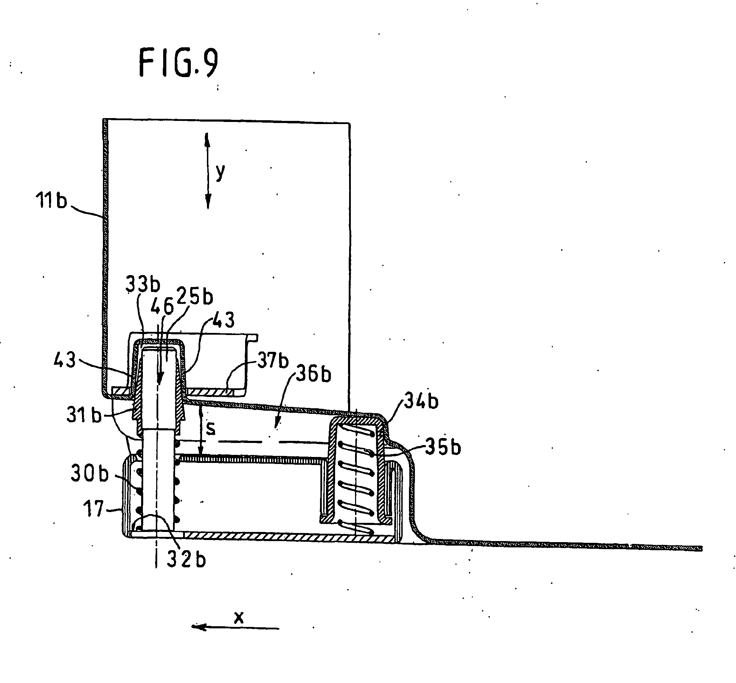

Fig. 6 und Fig. 9 zeigen das Befestigungselement 25b erster Art in einer Position, in der es in die entsprechende Aufnahme 33b erster Art eingerückt ist. Das Befestigungselement 25b befindet sich hier in Sperrposition

Das Konuselement 31b ist verschieblich auf dem Befestigungselement 25b erster Art gelagert und wirkt mit den entsprechenden Werkstoffbereichen 43 der Verkleidung 11b zusammen (Fig. 9), insbesondere mit den Randbereichen 43 der Aufnahme 33a, 33b.

Die Betätigung der Kfz-Sicherheitseinrichtung 10 ist wie folgt: Ausgehend von einer Position, in der die Kfz-Sicherheitseinrichtung 10 aus dem Kraftfahrzeug vollständig entnommen ist, soll diese zunächst in eine Vor-Montageposition gemäß Fig. 5 überführt werden. Hierzu wird die Kfz-Sicherheitseinrichtung 10 insbesondere bei in Fahrtrichtung X nach vorn umgelegter Kfz-Fondlehne 12 in den Bereich des Kulissenschlitzes 36b gebracht und die beiden, an den axialen Endbereichen 18a, 18b des Gehäuses 17 angeordneten Haltemittel 34a, 34b werden in den entsprechenden Kulissenschlitz 36a, 36b eingeführt. Durch eine entsprechende Führung kann dafür gesorgt werden, dass die in Fig. 5 dargestellte Position, in der das entsprechende Haltemittel 34 in einer Anschlagposition angeordnet ist, erreicht wird. Die Kfz-Sicherheitseinrichtung ist in dieser Einbaulage noch nicht an einer Befestigungsstelle festgelegt, wird jedoch durch die Haltemittel 34a, 34b in ihrer Vor-Montageposition gehalten. Die Haltekraft kann nunmehr von der Seitenverkleidung 11a, 11b aufgebracht werden.

Um die Kfz-Sicherheitseinrichtung 10 nunmehr an der Befestigungsstelle 11a, 11b festzulegen, wird das Betätigungselement 16 aus seiner in Fig. 4 dargestellten Position in seine in Fig. 3 dargestellte Position überführt. Im Laufe der Schwenkbewegung des Betätigungselementes 16 erreicht zunächst das Befestigungselement 25b erster Art die entsprechende Aufnahme 33b der Seitenverkleidung 11b, worauf hingewiesen wird, dass die Angelegenheit bezüglich der Fahrzeuglängsachse im wesentlichen symmetrisch aufgebaut ist, jedenfalls was die Befestigungselemente 25a, 25b erster Art betrifft.

Nachdem die Befestigungselemente 25b erster Art in die Aufnahme 33b zumindest teilweise eingetaucht sind, kommt das Konuselement 31b mit den entsprechenden Werkstoffbereichen 43 der Aufnahme 33b in Kontakt und wird an einem weiteren Eintauchen in die Aufnahme 33b hinein gehindert. Das relativ zu dem Konuselement 31b axial verschiebliche Befestigungselement 25b erster Art kann bei fortlaufender Verschwenkung des Betätigungselementes 16 jedoch noch weiter in die Aufnahme 33b hinein eintauchen. In dem Zusammenhang wird darauf hingewiesen, dass die in Fig. 9 dargestellten Größenverhältnisse nicht unbedingt maßstäblich sind. Wesentlich ist jedoch, dass die Aufnahmen 33a, 33b einen Aufnahmeraum aufweisen, der wesentlich größer als die Befestigungselemente ist.

Bei einer weiteren Betätigung des Betätigungselementes 16 in seiner Fig. 3 dargestellte Endlage hinein wird jedoch noch folgendes erreicht: Sobald das Konuselement 31b an den Werkstoffbereichen 43 der Aufnahme 33b anliegt, wird dieses festgehalten. Eine weitere Bewegung des Betätigungselementes 16 hat eine Annäherung der Anschlagfläche 32b an die Seitenverkleidung 11b zur Folge, so dass das Federelement 30b gespannt wird.

Das Federelement 30b ist von seiner Federcharakteristik her so gewählt, dass sehr große Vorspannkräfte zwischen dem Gehäuse 17 und der Seitenverkleidung 11b erzeugt werden können. Der in Fig. 9 schematisch mit s bezeichnete Abstand zwischen dem Gehäuse 17 und der Seitenverkleidung 11b kann daher verhältnismäßig großen Toleranzen unterliegen. Die Spannvorrichtung 29b, zu der das Betätigungselement 16, das Gestänge 20, die Befestigungselemente 25a, 25b erster Art, die Federelemente 30a, 30b und die entsprechenden Konuselemente 31a, 31b gehören, ermöglicht somit die Erzeugung sehr großer Vorspannkräfte und damit einen Ausgleich auch sehr großer Toleranzen.

Hierbei ist insbesondere wichtig, dass die Länge des Hebelarms des Betätigungselementes 16, wie dies beispielsweise Fig. 1 erkennen lässt, etwa die Hälfte der Breite der 2/3-Lehne 15 beträgt, die Schwenkachse 21 somit ungefähr mittig bezüglich des 2/3-Teils 15 der Kfz-Fondlehne 12 angeordnet ist. Alternativ ist selbstverständlich auch eine Anordnung mittig im Kfz möglich. Auf diese Weise steht ein sehr langer Hebelarm zur Verfügung, der durch eine vorteilhafte Kraft- und Drehmomentübertragung zu einem sehr großen axialen Verschiebeweg für die Befestigungselemente 16 führt.

In diesem Zusammenhang ist darauf hinzuweisen, dass die Tiefe der Aufnahme 33a, 33b entsprechend gewählt werden kann; um diesen großen Toleranzausgleich entsprechend zu begünstigen.

Das Betätigungselement 16 ist darüber hinaus in seinen beiden Endlagen gemäß Fig. 3 und 4 selbsthemmend gesichert. Dies wird erreicht, durch die besondere Anordnung der Achsen 28 der Kopplungsmittel 27 an den entsprechenden Stangen 24a, 24b und dem zweiten Zahnrad 23. Die Figuren 3 und 4 lassen erkennen, dass die Kraftlinien derart sind, dass im gespannten Zustand der Spannvorrichtung 29a, 29b gemäß Fig. 3 dieser Spannzustand gesichert ist, eine Bewegung der Stangen 24a, 24b axial aufeinander zu verhindert wird. Eine gesonderte Arretierung des Betätigungselementes 16 in seinen entsprechenden Endlagen ist daher entbehrlich.

Im Folgenden sollen die Spannvorrichtungen 29c, 29d erläutert werden, die zur lehnseitigen Befestigung und zur Verspannung des Gehäuses 17 relativ zu der Kfz-Fondlehne 12 dienen. Hierzu wird insbesondere auf die Figuren 3, 4, 10 und 11 verwiesen.

Die Befestigungselemente 26a, 26b zweiter Art sind fest relativ zu den entsprechenden Stangen 24a, 24b angeordnet und gemeinsam mit diesen bewegbar. Die Befestigungselemente 26a, 26b sind nach Art von greiferartigen Ansätzen oder Schiffchen ausgebildet, denen jeweils eine besondere Führungsfläche 40 nach Art einer Spannfläche zugeordnet ist. Diese hintergreift Befestigungsabschnitte 39 von Aufnahmen 38 zweiter Art, die in der Kfz-Fondlehne 12 angeordnet sind.

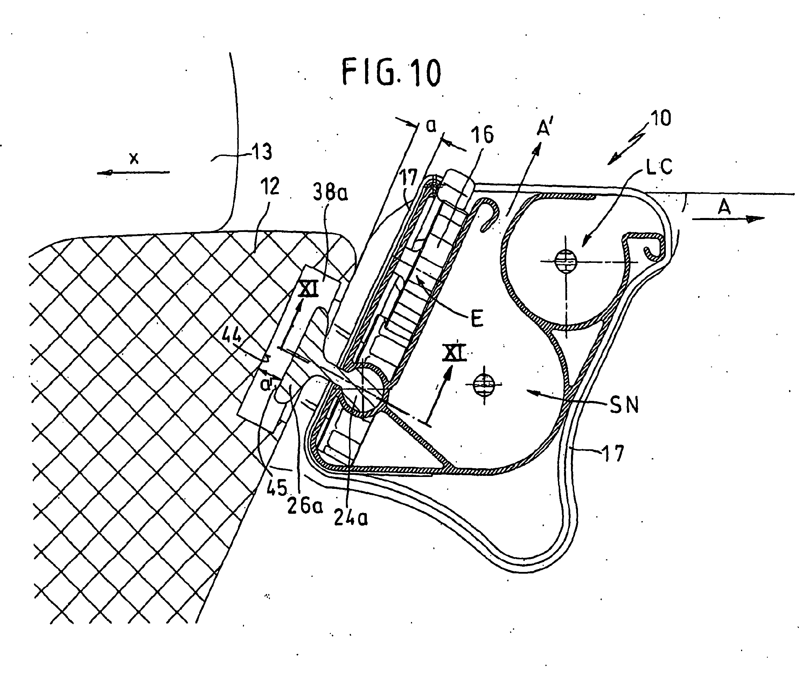

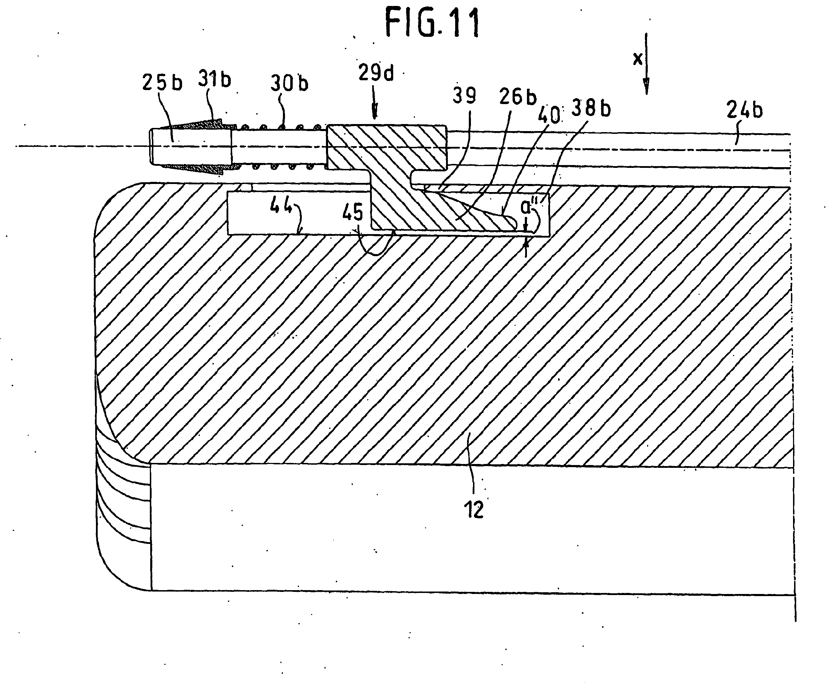

Hierzu ist anzumerken, dass vorteilhafterweise zwei Aufnahmen 38a, 38b beabstandet voneinander in dem 2/3-Teil 15 der Kfz-Fondlehne 12 angeordnet sind. Fig. 10 zeigt die Kfz-Sicherheitseinrichtung 10 in einer Montageposition, in der das Gehäuse 17 mittels der Befestigungselemente 25a, 25b erster Art an den Seitenverkleidungen 11a, 11b festgelegt ist. Die Befestigungselemente 26a, 26b zweiter Art tauchen dabei in die Aufnahmen 38a, 38b berührungslos ein, so dass zwischen Kfz-Fondlehne 12 und dem Gehäuse 17 keine unmittelbare Verbindung, insbesondere keine kraftschlüssige Verbindung besteht. Die in Fig. 10 dargestellte Situation entspricht im wesentlichen der in Fig. 11 dargestellten Position, bei der das Befestigungselement 26b zweiter Art nach links verschoben ist.

Fig. 10 lässt erkennen, dass zwischen der Kfz-Fondlehne 12 und dem Gehäuse 17 ein Abstand a besteht. Dieser Abstand ist grundsätzlich notwendig, um ein Ausweichen der Kfz-Fondlehne 12 aufgrund ihrer Elastizität zu ermöglichen.

Ein entsprechender Abstand a' ist demzufolge zwischen dem Grund 44 der Aufnahme 38a und der der Lehne 12 zugewandten Seite 45 des Befestigungselementes 26b zweiter Art gemäß Fig. 10 vorgesehen.

Soll nun aus der Montageposition gemäß Fig. 10, bei der die Kfz-Sicherheitseinrichtung an den Kfz-Seitenwänden festgelegt ist, eine Montageposition erreicht werden, in der die Kfz-Sicherheitseinrichtung an der Kfz-Fondlehne 12 festgelegt ist, so wird das Betätigungselement 16 aus seiner in Fig. 3 dargestellten Position in seine in Fig. 4 dargestellte Position überführt. Die Stangen 24a, 24b und somit auch die Betätigungselemente 26a, 26b zweiter Art werden dabei aufeinander zu bewegt.

Fig. 11 verdeutlicht, dass aufgrund des Vorsehens der Führungsfläche 40, die als Spannfläche fungiert, der bezüglich Fig. 11 linke Endbereich des Befestigungsabschnitts 39 entlang der Führungsfläche 40 gleitet, bis die in Fig. 11 dargestellte Position erreicht ist (Relativbewegung). Hierbei hat sich der Abstand a' zwischen dem Grund 44 der Ausnehmung 38b und der der Lehne 12 zugewandten Seite 45 des Befestigungselementes 26b zweiter Art gemäß Fig. 11 auf ein Minimum a" reduziert. Das Gehäuse 17 der Kfz-Sicherheitseinrichtung 10 hat sich somit um die Strecke t=a'-a" zu der Lehne 12 hinbewegt.

Diese Verlagerung des Gehäuses 17 relativ zu der Seitenverkleidung 11a, 11b in Fahrtrichtung X des Kfz nach vom zur Lehne 12 hin, konnte nur dadurch erreicht werden, dass zunächst eine Entriegelung der Befestigungselemente 25a, 25b erster Art erfolgte, diese mithin die entsprechenden Aufnahmen 33a, 33b erster Art verließen. Schließlich wurde die in Fig. 5 dargestellte Vor-Montageposition erreicht, bei der die Kfz-Sicherheitseinrichtung 10 im wesentlichen von den Haltemitteln 34a, 34b gehalten ist. Dieser Vor-Montageposition kann z.B. eine Position des Betätigungselementes 16 auf halbem Weg zwischen den beiden Endlagen gemäß Fig. 3 und Fig. 4 entsprechen.

Schließlich findet, bei fortlaufender Betätigung des Betätigungselementes 16 eine Relativverschiebung des Gehäuses 17 hin zu der Lehne 12 statt, wobei eine derartige Bewegung von den Befestigungselementen 25a, 25b erster Art nicht behindert ist.

Durch eine Betätigung des Betätigungselementes 16 können verhältnismäßig große Vorspannkräfte zwischen dem Gehäuse 17 und der Kfz-Fondlehne 12 erreicht werden. Die Spannfläche 40 kann in ihrer Neigung auf den Befestigungsabschnitt 39 der Aufnahmen 38a, 38b derart angepasst werden, dass eine signifikante Relativverschiebung des Gehäuses 17 relativ zu der Lehne 12 erst erfolgt, wenn die Befestigungselemente 25a, 25b erster Art die Aufnahmen 33a, 33b verlassen haben. Andererseits kann die Führungsfläche 40 derart gestaltet werden, dass der Verschiebeweg t des Gehäuses 17 relativ zu der Kfz-Fondlehne 12 tatsächlich verhältnismäßig groß gewählt werden kann, und somit auch große Toleranzen ausgeglichen werden können.

Das Vorsehen eines Hebels mit einer großen Armlänge als Betätigungselement 16 bietet darüber hinaus die Möglichkeit, einem Benutzer mit verhältnismäßig geringen Bedienkräften zu ermöglichen, sehr hohe Vorspannkräfte zu erzeugen.

Erfindungsgemäß weist die Kfz-Sicherheitseinrichtung 10 somit zwei voneinander unabhängige Arten von Spannvorrichtungen 29a, 29b einerseits und 29c, 29d andererseits auf, wobei beide Arten von Spannvorrichtungen mit einem gemeinsamen Betätigungselement 16 betätigt werden können. Das Betätigungselement 16 kann dabei zugleich noch als Schalter für eine wechselnde Befestigung dienen.

Herstellungs- beziehungsweise Montagetoleranzen können dabei somit nicht nur hinsichtlich des Abstandes der beiden Aufnahmen 33a, 33b in Fahrzeugquerrichtung Y ausgeglichen werden, sondern es ist auch möglich, Toleranzen in Fahrzeugrichtung X zwischen der Kfz-Fondlehne 12 und einem an der Seitenverkleidung 11a, 11b befestigten Gehäuse 17 in besonderem Maße auszugleichen. Dies bietet zugleich die Möglichkeit der Erzeugung besonders großer Vorspannkräfte, für die eine gesonderte Spannvorrichtung vorgesehen ist. Ein weiterer Vorteil der hohen Vorspannkräfte ist die Erzielung einer besonders großen Rüttelsicherung. Außerdem ermöglicht diese Anordnung die kraftsichere Ausbildung der Befestigung des Gehäuses 17 an dem fahrzeugseitigen Rohbau, also z.B. an der Seitenverkleidung 11a, 11b.

Fig. 10 lässt darüber hinaus erkennen, dass die erfindungsgemäße Kfz-Sicherheitseinrichtung die Anordnung einer Laderaumabdeckung in einem dafür vorgesehenen Einbauraum LC mit einer entsprechenden Ausfahrrichtung A und zugleich die Anordnung eines Trennnetzes in einem dafür vorgesehenen Einbauraum SN mit vorsehen kann, wobei das Trennnetz in Ausfahrrichtung A' ausgezogen werden kann und in aufgespanntem Zustand die Öffnung zwischen der Kfz-Fondlehne 12 und dem Dachhimmel verdeckt.

Im übrigen bleibt anzumerken, dass eine Befestigung des Gehäuses 17 der Kfz-Sicherheitseinrichtung 10 nicht ausschließlich fahrzeugseitig erfolgen muss, und die Erfindung neben den Befestigungsstellen Seitenverkleidung 11a, 11b beziehungsweise Kfz-Fondlehne 12 auch die Möglichkeit umfasst, dass das Gehäuse 17 an einem anderen Gehäuse lösbar befestigbar ist. So kann beispielsweise vorgesehen sein, ein Gehäuse für eine Trennnetzeinrichtung an einem Gehäuse für eine Laderaumabdeckung festzulegen. Auch hier kann eine besondere Ausbildung, die eine hohe Stabilität, gegebenenfalls auch eine Crashsicherheit ermöglicht, von Interesse sein. Das Vorsehen einer Spannvorrichtung 29a, 29b, 29c, 29d und die Erzeugung hoher Vorspannkräfte zwischen dem Gehäuse und der Befestigungsstelle sind dabei gleichermaßen von Interesse.

Fig. 10 deutet an, dass für das Betätigungselement 16 ein besonderer Einbauraum E an dem Gehäuse 17 vorgesehen ist, so dass das Betätigungselement 16, vorzugsweise in beiden Endlagen, über die Kontur des Gehäuses 17 im Wesentlichen nicht herausragt. Es kann jedoch weiter vorteilhaft vorgesehen sein, dass der Griffansatz 19 des Betätigungselementes 16 aus der Kontur des Gehäuses 17 hervorspringt, um leicht erkennbar und leicht greifbar zu sein.

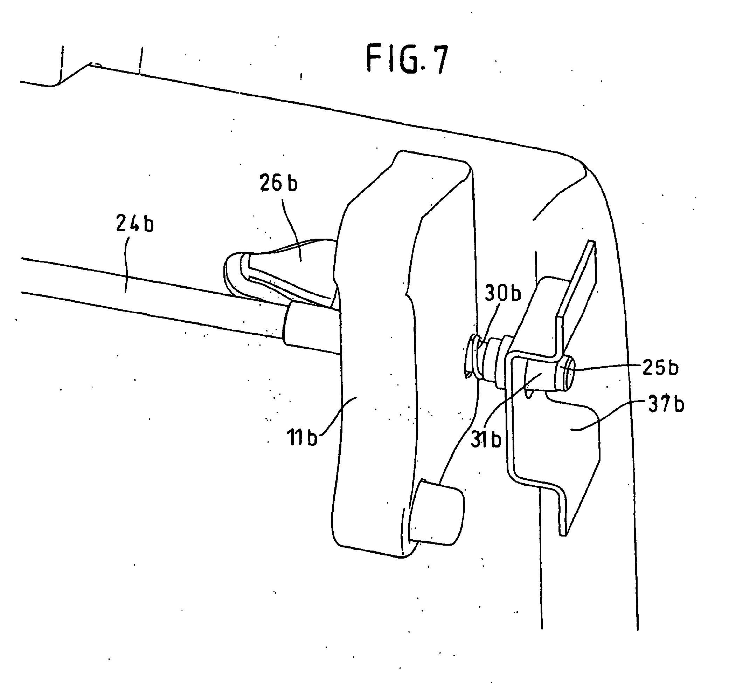

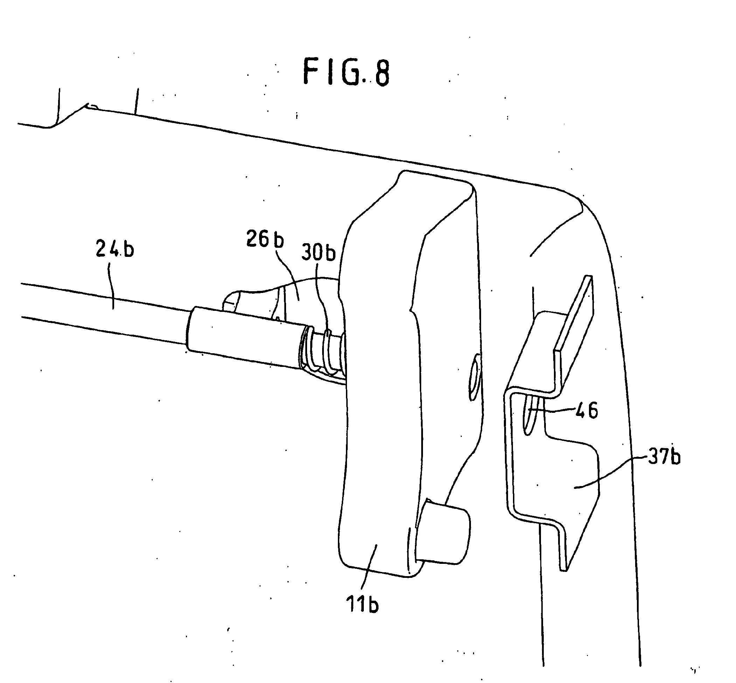

Das in den Fig. 7 bis 9 dargestellte Schließblech 37b ist, wie die Fig. 9 besonders deutlich erkennen lässt, hinter der beispielsweise aus Kunststoff bestehenden Seitenverkleidung 11b angeordnet. Das Schließblech 37b weist eine Öffnung 46 auf, die im Montagezustand des Schließbleches mit der entsprechenden Aufnahme 33b fluchtend angeordnet ist.

Das in Schließstellung befindliche Befestigungselement 25b erster Art durchgreift somit gemäß Fig. 9 einerseits die Öffnung 46 im Schließblech 37. Zugleich greift das Befestigungselement 25b erster Art in die Aufnahme 33b der Verkleidung 11b ein.

Da das Befestigungselement 25b erster Art entsprechend stabil ausgebildet sein kann, und durch die Anordnung des Gestänges 20 praktisch über die gesamte axiale Länge der Kfz-Sicherheitseinrichtung 10 eine durchgehend stabile Ausbildung, insbesondere ohne Zwischenschaltung von Federelementen möglich ist, kann hier eine besonders crashsichere Ausbildung erreicht werden.

Hierbei ist es auch wesentlich, dass die in Gebrauchssituation befindliche Kfz-Sicherheitseinrichtung praktisch nur über das Konuselement 31 b an der Verkleidung 11a, 11b in axialer Richtung gesichert ist, sich die axialen Enden der Befestigungselemente 25a, 25b erster Art und der Verkleidung 11a, 11b jedoch nicht unmittelbar berühren. Die Vorspannfunktion ist somit im normalen Betriebszustand von einer sozusagen ruhenden crashsicheren Haltefunktion entkoppelt.

Anhand beispielsweise der Fig. 2 wird auch deutlich, daß sich die Befestigungselemente 25a, 25b unmittelbar an den Stangen 24a, 24b abstützen, welche sich wiederum unmittelbar an dem zweiten Zahnrad 23 abstützen. Dieses wiederum ist unmittelbar gekoppelt mit dem Betätigungselement 16. Da die Drehachse des zweiten Zahnrads 23 wie auch die Schwenkachse 21 des ersten Zahnrades 21 relativ zu dem in Fig. 2 nicht dargestellten Gehäuse 17 fest angeordnet sind, findet eine Abstützung der in Sperrposition (Fig. 3) befindlichen Befestigungselemente 25a und 25b mittelbar am Gehäuse statt. Der Kraftkopptungsweg ist auf Grund der festen Kopplung der Befestigungselemente 25a, 25b an den stangenförmigen Elementen 24a, 24b ohne Zwischenschaltung eines Elastizität in Verlagerungsrichtung (Doppelpfeil Y) aufnehmenden Federelementes möglich.

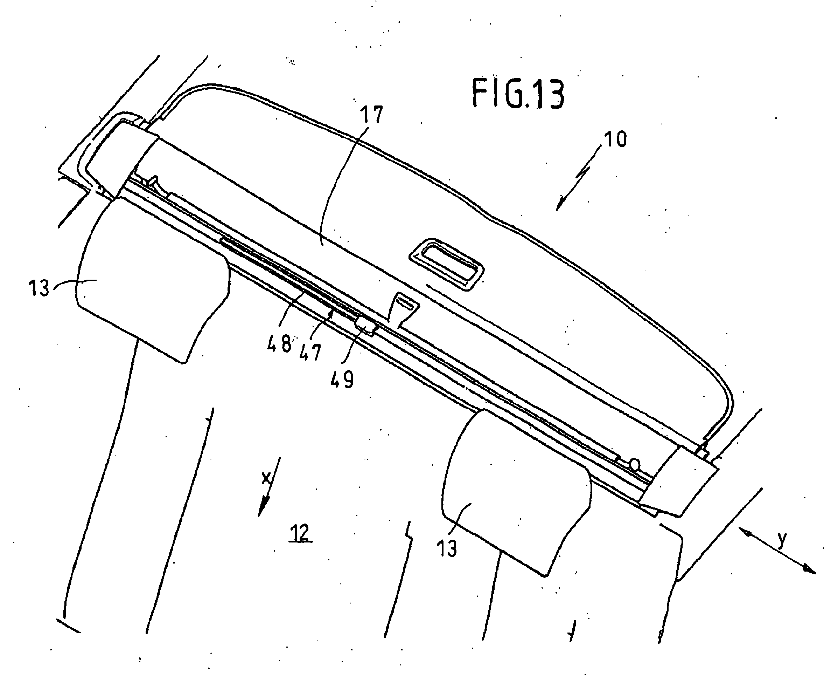

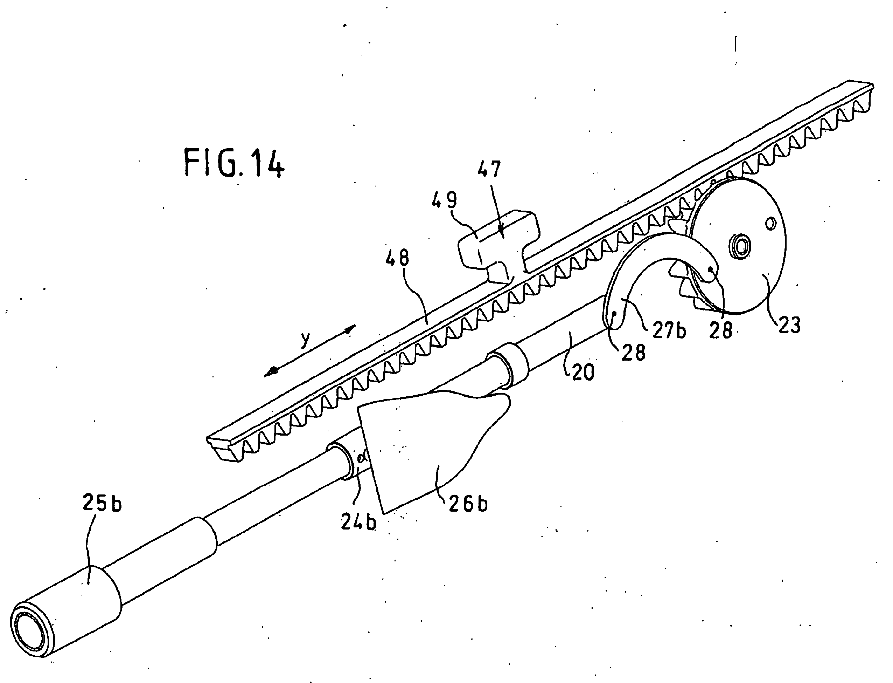

An Hand der Fig. 13 und 14 soll nun ein zweites Ausführungsbeispiel der erfindungsgemäßen Kfz-Sicherheitseinrichtung 10 beschrieben werden, wobei darauf hingewiesen wird, das gleiche oder vergleichbare Elemente oder Teile der Übersichtlichkeit halber mit gleichen Bezugsziffern versehen sind.

Insbesondere aus dem Vergleich der Fig. 3 und 14 wird deutlich, daß das zweite Ausführungsbeispiel gemäß Fig. 14 anstelle eines Schwenkhebels 16 einen axial verlagerbaren Schieber 47 aufweist. Der Schieber 47 umfaßt eine Zahnleiste oder Zahnstange 48 sowie einen Griffansatz 49. Die Zahnleiste 48 wirkt mit der Verzahnung des aus dem ersten Ausführungsbeispiel her bekannten zweiten Zahnrades 23 zusammen.

Der strukturelle Aufbau des Gestänges 20 des zweiten Ausführungsbeispiels, einschließlich der Kopplungsmittel 27a, 27b der Stangen 24a, 24b und der weiteren Elemente entspricht dem des ersten Ausführungsbeispiels gemäß Fig. 3. Fig. 14 zeigt in abgebrochener Darstellung lediglich einen Abschnitt der Zahnstange 48, wobei außerdem das Stangenelement 24a und das Kopplungsmittel 27a gemäß Fig. 3 der Übersichtlichkeit halber weggelassen worden sind.

Der Griffansatz 49 ragt aus den Konturen des Gehäuses 17 zumindest geringfügig heraus oder kann zumindest in eine Betätigungsposition verlagert werden, in der der Griffansatz 49 für einen Benutzer ohne weiteres zugänglich ist.

Eine Verlagerung des Schiebers 47 erfolgt quer zur Fahrtrichtung X des Kfz, also entlang des Doppelpfeiles Y.

Ein wesentlicher Unterschied zwischen den beiden Ausführungsbeispielen besteht darin, daß bei dem ersten Ausführungsbeispiel, beispielsweise gemäß Fig. 3, eine geringe Bedienkraft insbesondere aus der Länge des Hebelarmes 16 resultiert. Bei dem zweiten Ausführungsbeispiel gemäß den Fig. 13 und 14 wird eine geringe Bedienkraft dadurch erreicht, daß der Schieber 47 über einen relativ großen axialen Verschiebeweg verlagert wird. Dieser Verschiebeweg kann maximal die gesamte axiale Länge des Gehäuses betragen, vorteilhafterweise jedoch etwa die Hälfte der Gesamtlänge des Gehäuses.

Dementsprechend ist die Zahl der Zähne der Zahnstange 48, die Zahl der Zähne des zweiten Zahnrades 23 sowie die Anordnung der Zähne entsprechend angepaßt.

Vorteilhafterweise ist auch hier eine selbsthemmende Arretierung der Endlagen des Schiebers 47 vorgesehen, beispielsweise nach Art von ÜberTotpunkt-Stellungen.

An Stelle eines axial verlagerbaren Schiebers 47, der eine Zahnstange 48 umfaßt, kann zur Betätigung des Gestänges 20 auch ein Seil- oder Riemenantrieb vorgesehen sein. In einem solchen Fall ist vorteilhafterweise vorgesehen, daß das zweite Zahnrad 23 zumindest teilweise von dem Riemen- oder Seiltrieb umschlungen ist.

## Patentansprüche

1. Kfz-Sicherheitseinrichtung (10) mit einer von einer Wickelwelle abziehbaren flexiblen Werkstoffbahn, die in einem Gehäuse (17) gelagert ist, welches an wenigstens einer Befestigungsstelle (11a, 11b, 12, 15) mittels zumindest einem Befestigungselement (25a, 25b, 26a, 26b) in einer Montageposition lösbar festlegbar ist, **dadurch gekennzeichnet, dass** dem Befestigungselement (25a, 25b, 26a, 26b) eine Spannvorrichtung (29a, 29b, 29c, 29d) zugeordnet ist, welche mittels eines Betätigungselementes (16, 47) zur Erzeugung einer Vorspannung zwischen dem Gehäuse (17) und der Befestigungsstelle (11a, 11b, 12, 15) aus einem zumindest teilweise entspannten Ruhezustand in einen Spannzustand überführbar ist, wobei die Spannvorrichtung (29a, 29b, 29c, 29d) bei in Montageposition befindlichem Gehäuse (17) dauerhaft in dem Spannzustand verbleibt.

2. Kfz-Sicherheitseinrichtung nach Anspruch 1, **dadurch gekennzeichnet, dass** der Spannvorrichtung (29a, 29b, 29c, 29d) eine Arretiervorrichtung zugeordnet ist, die die Spannvorrichtung (29a, 29b, 29c, 29d) in dem Spannzustand sichert.

3. Kfz-Sicherheitseinrichtung nach Anspruch 1 oder 2, **dadurch gekennzeichnet, dass** eine Arretiervorrichtung (22, 23, 27, 28) für das Betätigungselement (16, 47) vorgesehen ist, die die Spannvorrichtung (29a, 29b, 29c, 29d) in dem Spannzustand sichert.

4. Kfz-Sicherheitseinrichtung nach einem der vorangegangenen Ansprüche, **dadurch gekennzeichnet, dass** das Betätigungselement (16, 47) zwischen zwei Endlagen, insbesondere zwischen einer Löseposition und einer Sperrposition verlagerbar ist, wobei insbesondere die Löseposition des Betätigungselementes (16, 47) dem Ruhezustand der Spannvorrichtung (29a, 29b, 29c, 29d) entspricht.

5. Kfz-Sicherheitseinrichtung nach Anspruch 4, **dadurch gekennzeichnet, dass** das Betätigungselement (16, 47) zumindest in einer Endlage selbsthemmend und/oder automatisch arretierend ausgebildet ist.

6. Kfz-Sicherheitseinrichtung nach Anspruch 4 oder 5, **dadurch gekennzeichnet, dass** das Betätigungselement (16, 47) zumindest in einer Endlage eine Übertotpunktstellung aufweist.

7. Kfz-Sicherheitseinrichtung nach einem der vorangegangenen Ansprüche, **dadurch gekennzeichnet, dass** das Betätigungselement (16) als schwenkbar gelagerter Hebel ausgebildet ist.

8. Kfz-Sicherheitseinrichtung nach Anspruch 7, **dadurch gekennzeichnet, dass** die Schwenkachse (21) des Hebels (16) im wesentlichen senkrecht zu einer Längsachse des Gehäuses (17) angeordnet ist.

9. Kfz-Sicherheitseinrichtung nach Anspruch 7 oder 8, **dadurch gekennzeichnet, dass** der Hebel (16) einen Hebelarm besitzt, dessen Länge etwa der Hälfte der Breite einer teilbaren Kfz-Fondslehne (15) entspricht.

10. Kfz-Sicherheitseinrichtung nach einem der Ansprüche 1 bis 6, **dadurch gekennzeichnet, dass** das Betätigungselement als axial verlagerbarer Schieber (47) ausgebildet ist.

11. Kfz-Sicherheitseinrichtung nach Anspruch 10, **dadurch gekennzeichnet, dass** der Schieber im wesentlichen quer zur Fahrtrichtung (X) des Kfz verlagerbar ist.

12. Kfz-Sicherheitseinrichtung nach einem der vorangegangenen Ansprüche, **dadurch gekennzeichnet, dass** dem Betätigungselement (16, 47) ein Gestänge (20) zum Zusammenwirken mit den Befestigungselementen (25a, 25b, 26a, 26b) zugeordnet ist.

13. Kfz-Sicherheitseinrichtung nach einem der vorangegangenen Ansprüche, **dadurch gekennzeichnet, dass** dem Gehäuse (17) zwei Arten von Befestigungselementen (25a, 25b, 26a, 26b), insbesondere für eine Kfz-seitenwandseitige und für eine Kfz-lehnenseitige Befestigung, zugeordnet sind.

14. Kfz-Sicherheitseinrichtung nach Anspruch 13, **dadurch gekennzeichnet, dass** die Befestigungselemente (25a, 25b) erster Art axial verlagerbare Zapfen umfassen, die insbesondere an den axialen Endbereichen (18a, 18b) des Gehäuses (17) angeordnet sind.

15. Kfz-Sicherheitseinrichtung nach Anspruch 13 oder 14, **dadurch gekennzeichnet, dass** die Befestigungselemente (26a, 26b) zweiter Art Steckelemente umfassen, die insbesondere an der zu einer Kfz-Fondlehne (12) hingewandeten Seite des Gehäuses (17) angeordnet sind.

16. Kfz-Sicherheitseinrichtung nach Anspruch 15, **dadurch gekennzeichnet, dass** in der Kfz-Fondlehne (12) Aufnahmen (38a, 38b) angeordnet sind, die von den Steckelementen (26a, 26b) hintergreifbar sind.

17. Kfz-Sicherheitseinrichtung nach einem der vorangegangenen Ansprüche, insbesondere nach Anspruch 13, **dadurch gekennzeichnet, dass** unterschiedliche Arten von Spannvorrichtungen (29a, 29b, 29c, 29d) vorgesehen sind, insbesondere jeder Art von Befestigungselementen eine Art von Spannvorrichtungen zugeordnet ist.

18. Kfz-Sicherheitseinrichtung nach einem der vorangegangenen Ansprüche, **dadurch gekennzeichnet, dass** eine Spannvorrichtung (29a, 29b) erster Art ein Federelement (30a) umfasst.

19. Kfz-Sicherheitseinrichtung nach einem der vorangegangenen Ansprüche, **dadurch gekennzeichnet, dass** eine Spannvorrichtung (29c, 29d) zweiter Art eine Führungsfläche (40), insbesondere nach Art einer Führungsschräge und/oder nach Art einer Spannfläche, umfasst.

20. Kfz-Sicherheitseinrichtung nach einem der vorangegangenen Ansprüche, **dadurch gekennzeichnet, dass** das Gehäuse aus einer der Befestigungsstelle (11a, 11b, 12, 15) fernen Entnahmeposition über eine Vor-Montageposition in die Montageposition überführbar ist.

21. Kfz-Sicherheitseinrichtung nach Anspruch 20, **dadurch gekennzeichnet, dass** dem Gehäuse Haltemittel (34a, 34b) zur Sicherung der Vor-Montageposition zugeordnet sind.

22. Kfz-Sicherheitseinrichtung nach einem der vorangegangenen Ansprüche, **dadurch gekennzeichnet, dass** das Gehäuse mittels des Betätigungselementes (16, 47) aus einer ersten Montageposition, insbesondere über die Vor-Montageposition, in eine zweite Montagepoinsbesondere über die Vor-Montageposition, in eine zweite Montageposition überführbar ist.

23. Kfz-Sicherheitseinrichtung nach einem der vorangegangenen Ansprüche, **dadurch gekennzeichnet, dass** das Betätigungselement (16, 47) in einem dem Gehäuse (17) zugeordneten Einbauraum (E), insbesondere im wesentlichen innerhalb der Kontur des Gehäuses (17), untergebracht ist.

24. Kfz-Sicherheitseinrichtung nach einem der Ansprüche 1 bis 23, mit einer von einer Wickelwelle abziehbaren flexiblen Werkstoffbahn, die in einem Gehäuse (17) gelagert ist, welches an wenigstens einer Befestigungsstelle (11a, 11b, 12, 15), z. B. fahrzeugseitig, mittels zumindest einem Befestigungselement (25a, 25b, 25c, 25d) lösbar festlegbar ist, wobei das Befestigungselement zwischen einer Sperrposition und einer Freigabeposition relativ zu dem Gehäuse verlagerbar ist, **dadurch gekennzeichnet, dass** sich das in Sperrposition befindliche Befestigungselement (25a, 25b, 25c, 25d) zumindest mittelbar im wesentlichen starr an dem Gehäuse (17) abstützt.

25. Kfz-Sicherheitseinrichtung nach Anspruch 24, **dadurch gekennzeichnet dass** sich das in Sperrposition befindliche Befestigungselement (25a, 25b, 25c, 25d) zumindest mittelbar im wesentlichen starr an einem Betätigungselement (16, 47) für das Befestigungselement (25a, 25b, 25c, 25d) abstützt.

## Claims

1. A motor vehicle security device (10) having a flexible material web drawable from a winding roller, which material web is mounted in a housing (17) that is releasably fixable in a mounted position to at least one fixing point (11a, 11b, 12, 15) by means of at least one fixing element (25a, 25b, 26a, 26b), **characterised in that** a tension device (29a, 29b, 29c, 29d) is associated with the fixing element (25a, 25b, 26a, 26b), which tension device can be moved by means of an operating element (16, 47) from an at least partly relaxed state of rest into a tensioned state to create a bias between the housing (17) and the fixing point (11a, 11b, 12, 15), the tension device (29a, 29b, 29c, 29d) remaining permanently in the tensioned state when the housing (17) is in the mounted position.

2. A motor vehicle security device according to claim 1, **characterised in that** associated with the tension device (29a, 29b, 29c, 29d) is a locking device, which secures the tension device (29a, 29b, 29c, 29d) in the tensioned state.

3. A motor vehicle security device according to claim 1 or 2, **characterised in that** a locking device (22, 23, 27, 28) for the operating element (16, 47) is provided, which secures the tension device(29a, 29b, 29c, 29d) in the tensioned state.

4. A motor vehicle security device according to any one of the preceding claims, **characterised in that** the operating element (16, 47) is displaceable between two end positions, especially between a release position and a locking position, wherein in particular the release position of the operating element (16, 47) corresponds to the state of rest of the tension device (29a, 29b, 29c, 29d).

5. A motor vehicle security device according to claim 4, **characterised in that** at least in one end position the operating element (16, 47) is of self-locking and/or automatically locking construction.

6. A motor vehicle security device according to claim 4 or 5, **characterised in that** at least in one end position the operating element (16, 47) has a beyond dead centre position.

7. A motor vehicle security device according to any one of the preceding claims, **characterised in that** the operating element (16) is in the form of a pivotally mounted lever.

8. A motor vehicle security device according to claim 7, **characterised in that** the axis of rotation (21) of the lever (16) is arranged substantially perpendicular to a longitudinal axis of the housing (17).

9. A motor vehicle security device according to claim 7 or 8, **characterised in that** the lever (16) has a lever arm, the length of which corresponds to approximately half the width of a split motor vehicle rear seat back (15).

10. A motor vehicle security device according to any one of claims 1 to 6, **characterised in that** the operating element is in the form of an axially displaceable slide (47).

11. A motor vehicle security device according to claim 10, **characterised in that** the slide is displaceable substantially transversely to the direction of travel (X) of the motor vehicle.

12. A motor vehicle security device according to any one of the preceding claims, **characterised in that** a rod assembly (20) for co-operation with the fixing elements (25a, 25b, 26a, 26b) is associated with the operating element (16, 47).

13. A motor vehicle security device according to any one of the preceding claims, **characterised in that** two types of fixing elements (25a, 25b, 26a, 26b), especially for fixing to a vehicle side wall and to a vehicle seat back, are associated with the housing (17).

14. A motor vehicle security device according to claim 13, **characterised in that** the fixing elements (25a, 25b) of the first type comprise axially displaceable pins, which are arranged especially at the axial end regions (18a, 18b) of the housing (17).

15. A motor vehicle security device according to claim 13 or 14, **characterised in that** the fixing elements (26a, 26b) of the second kind comprise plug-in elements, which are arranged especially on the side of the housing (17) facing towards a vehicle rear seat back (12).

16. A motor vehicle security device according to claim 15, **characterised in that** in the vehicle rear seat back (12) there are arranged locating recesses (38a, 38b) behind which the plug-in elements (26, 26a, 26b) engage.

17. A motor vehicle security device according to any one of the preceding claims, especially according to claim 13, **characterised in that** different types of tension devices (29a, 29b, 29c, 29d) are provided, in particular, one type of tension device is associated with every type of fixing elements.

18. A motor vehicle security device according to any one of the preceding claims, **characterised in that** a tension device (29a, 29b) of the first type comprises a spring element (30a).

19. A motor vehicle security device according to any one of the preceding claims, **characterised in that** a tension device (29c, 29d) of the second type comprises a guide surface (40), especially in the manner of a sloping guide surface and/or in the manner of a tensioning surface.

20. A motor vehicle security device according to any one of the preceding claims, **characterised in that** the housing is movable from a removal position remote from the fixing point (11a, 11b, 12, 15), via a pre-mounting position, into the mounted position.

21. A motor vehicle security device according to claim 20, **characterised in that** retaining means (34a, 34b) for securing the pre-mounting position are associated with the housing.

22. A motor vehicle security device according to any one of the preceding claims, **characterised in that** the housing is movable by means of the operating element (16, 47) from a first mounted position, especially via the pre-mounting position, into a second mounted position.

23. A motor vehicle security device according to any one of the preceding claims, **characterised in that** the operating element (16, 47) is housed in an installation space (E) associated with the housing (17), especially substantially within the contours of the housing (17).

24. A motor vehicle security device according to any one of claims 1 to 23, having a flexible material web drawable from a winding roller, which material web is mounted in a housing (17) that is detachably fixable to at least one fixing point (11a, 11b, 12, 15), e.g. on the vehicle, by means of at least one fixing element (25a, 25b, 25c, 25d), the fixing element being movable between a locking position and a release position relative to the housing, **characterised in that** the fixing element (25a, 25b, 25c, 25d) located in the locking position is supported at least indirectly substantially rigidly on the housing (17).

25. A motor vehicle security device according to claim 24, **characterised in that** the fixing element (25a, 25b, 25c, 25d) located in the locking position is supported at least indirectly substantially rigidly on an operating element (16, 47) for the fixing element (25a, 25b, 25c, 25d).

## Revendications

1. Dispositif de sécurité pour véhicules (10) avec une bande en matériau flexible pouvant être tirée d'un arbre enrouleur, qui est placée dans un boîtier (17), lequel peut être bloqué de manière amovible dans une position de montage à au moins un point de fixation (11a, 11b, 12, 15) au moyen d'au moins un élément de fixation (25a, 25b, 26a, 26b), **caractérisé en ce qu'**à l'élément de fixation (25a, 25b, 26a, 26b) est affecté un dispositif de tension (29a, 29b, 29c, 29d), lequel peut être conduit au moyen d'un élément d'actionnement (16, 47) pour la production d'une prétension entre le boîtier (17) et le point de fixation (11a, 11b, 12, 15) à partir d'un état de repos au moins en partie détendu dans un état tendu, sachant que le dispositif de tension (29a, 29b, 29c, 29d) demeure durablement à l'état tendu avec le boîtier (17) se trouvant en position de montage.

2. Dispositif de sécurité pour véhicules selon la revendication 1, **caractérisé en ce qu'** au dispositif de tension (29a, 29b, 29c, 29d) est affecté un dispositif d'arrêt, qui assure le dispositif de tension (29a, 29b, 29c, 29d) à l'état tendu.

3. Dispositif de sécurité pour véhicules selon la revendication 1 ou 2, **caractérisé en ce qu'**un dispositif d'arrêt (22, 23, 27, 28), qui assure le dispositif de tension (29a, 29b, 29c, 29d) à l'état tendu est prévu pour l'élément d'actionnement (16, 47).

4. Dispositif de sécurité pour véhicules selon l'une quelconque des revendications précédentes, **caractérisé en ce que** l'élément d'actionnement (16, 47) peut être positionnable entre deux positions terminales, en particulier entre une position de desserrage et une position de blocage, sachant qu'en particulier la position de desserrage de l'élément d'actionnement (16, 47) correspond à l'état de repos du dispositif de tension (29a, 29b, 29c, 29d).

5. Dispositif de sécurité pour véhicules selon la revendication 4, **caractérisé en ce que** l'élément d'actionnement (16, 47) est conçu au moins dans une position terminale de manière autobloquante et/ou à arrêt automatique.

6. Dispositif de sécurité pour véhicules selon la revendication 4 ou 5, **caractérisé en ce que** l'élément d'actionnement (16, 47) comporte au moins dans une position terminale une mise en position au delà du point mort.

7. Dispositif de sécurité pour véhicules selon l'une quelconque des revendications précédentes, **caractérisé en ce que** l'élément d'actionnement (16) est conçu comme levier placé de manière à pouvoir pivoter.

8. Dispositif de sécurité pour véhicules selon la revendication 7, **caractérisé en ce que** l'axe de pivotement (21) du levier (16) est disposé pour l'essentiel verticalement par rapport à un axe longitudinal du boîtier (17).

9. Dispositif de sécurité pour véhicules selon la revendication 7 ou 8, **caractérisé en ce que** le levier (16) possède un bras, dont la longueur correspond environ à la moitié de la largeur d'un dossier arrière de véhicule (15) pouvant être divisé.

10. Dispositif de sécurité pour véhicules selon l'une quelconque des revendications 1 à 6, **caractérisé en ce que** l'élément d'actionnement est conçu comme tiroir (47) pouvant être placé de manière axiale.

11. Dispositif de sécurité pour véhicules selon la revendication 10, **caractérisé en ce que** le tiroir peut être placé pour l'essentiel en oblique par rapport à la direction de marche (X) du véhicule.

12. Dispositif de sécurité pour véhicules selon l'une quelconque des revendications précédentes, **caractérisé en ce qu'**à l'élément d'actionnement (16, 47) est affectée une tringlerie (20) pour l'action conjointe avec l'élément de fixation (25a, 25b, 26a, 26b).

13. Dispositif de sécurité pour véhicules selon l'une quelconque des revendications précédentes, **caractérisé en ce qu'**au boîtier (17) sont affectées deux sortes d'élément de fixation (25a, 25b, 26a, 26b), en particulier pour une fixation aux parois latérales du véhicule et pour une fixation aux dossiers du véhicule.

14. Dispositif de sécurité pour véhicules selon la revendication 13, **caractérisé en ce que** les éléments de fixation (25a, 25b) de la première sorte comprennent des chevilles pouvant être placées de manière axiale, qui sont disposées en particulier aux zones terminales axiales (18a, 18b) du boîtier (17).

15. Dispositif de sécurité pour véhicules selon la revendication 13 ou 14, **caractérisé en ce que** les éléments de fixation (26a, 26b) de la seconde sorte comprennent des éléments d'enfichage, qui sont disposés en particulier sur la face du boîtier (17) tournée vers le dossier arrière du véhicule (12).

16. Dispositif de sécurité pour véhicules selon la revendication 15, **caractérisé en ce que** dans le dossier arrière du véhicule (12) sont disposées des cavités (38a, 38b) qui peuvent être pénétrées par l'arrière par des éléments d'enfichage (26a, 26b).

17. Dispositif de sécurité pour véhicules selon l'une quelconque des revendications précédentes, en particulier la revendication 13, **caractérisé en ce que** différents sortes de dispositifs de tension (29a, 29b, 29c, 29d) sont prévues, en particulier à chaque sorte d'élément de fixation est affectée une sorte de dispositif de tension.

18. Dispositif de sécurité pour véhicules selon l'une quelconque des revendications précédentes, **caractérisé en ce qu'**un dispositif de tension (29a, 29b) de la première sorte comprend un élément de ressort (30a).

19. Dispositif de sécurité pour véhicules selon l'une quelconque des revendications précédentes, **caractérisé en ce qu'**un dispositif de tension (29c, 29d) de la seconde sorte comprend une surface de guidage (40), en particulier à la manière d'une entretoise de guidage et/ou à la manière d'une surface de tension.

20. Dispositif de sécurité pour véhicules selon l'une quelconque des revendications précédentes, **caractérisé en ce que** le boîtier peut être guidé à partir d'une position de prélèvement située loin du point de fixation (11a, 11b, 12, 15) par une position préalable de montage dans la position de montage.

21. Dispositif de sécurité pour véhicules selon la revendication 20, **caractérisé en ce qu'**au boîtier sont affectés des moyens de maintien (34a, 34b) pour assurer la position préalable de montage.

22. Dispositif de sécurité pour véhicules selon l'une quelconque des revendications précédentes, **caractérisé en ce que** le boîtier peut être conduit au moyen de l'élément d'actionnement (16, 47) à partir d'une première position de montage, en particulier par la position préalable de montage, dans une seconde position de montage, en particulier par la position préalable de montage, dans une seconde position de montage.

23. Dispositif de sécurité pour véhicules selon l'une quelconque des revendications précédentes, **caractérisé en ce que** l'élément d'actionnement (16, 47) est logé dans un espace intégré (E) affecté au boîtier (17), en particulier pour l'essentiel à l'intérieur des contours du boîtier (17).

24. Dispositif de sécurité pour véhicules selon l'une quelconque des revendications 1 à 23, avec une bande de matériau flexible, pouvant être tirée d'un arbre enrouleur, qui est placée dans un boîtier (17), lequel peut être bloqué de manière amovible, à au moins un point de fixation (11a, 11b, 12, 15), par exemple côté véhicule, au moyen d'au moins un élément de fixation (25a, 25b, 25c, 25d), sachant que l'élément de fixation peut être placé par rapport au boîtier entre une position de blocage et une position de libération, **caractérisé en ce que** l'élément de fixation (25a, 25b, 25c, 25d) se trouvant en position de blocage s'appuie au moins indirectement pour l'essentiel de manière rigide sur le boîtier (17).

25. Dispositif de sécurité pour véhicules selon la revendication 24, **caractérisé en ce que** l'élément de fixation (25a, 25b, 25c, 25d) se trouvant en position de blocage s'appuie au moins indirectement pour l'essentiel de manière rigide sur l'élément d'actionnement (16, 47) pour l'élément de fixation (25a, 25b, 25c, 25d).
